Europäisches Patentamt

European Patent Office

Office européen des brevets

(11) Veröffentlichungsnummer: **0 182 013 B1**

(12) **EUROPÄISCHE PATENTSCHRIFT**

(45) Veröffentlichungstag der Patentschrift: **24.04.91**

(51) Int. Cl.5: **F16B 5/02**

(21) Anmeldenummer: **85110598.1**

(22) Anmeldetag: **23.08.85**

(54) **Einrichtung zur Befestigung eines ersten Bauteils.**

(30) Priorität: **28.06.85 DE 3523168**
**10.11.84 DE 3441127**

(43) Veröffentlichungstag der Anmeldung:
**28.05.86 Patentblatt 86/22**

(45) Bekanntmachung des Hinweises auf die
Patenterteilung:
**24.04.91 Patentblatt 91/17**

(84) Benannte Vertragsstaaten:
**DE FR GB IT NL SE**

(56) Entgegenhaltungen:
**DE-U- 1 927 808**
**FR-A- 1 227 104**
**US-A- 2 374 743**
**US-A- 4 056 273**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Feldmann, Joachim, Ing. grad.
Auf dem Papenberg 8
W-3057 Neustadt 2(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

## Beschreibung

Die Erfindung betrifft eine Befestigungsanordnung eines ersten Bauteils gemäß den Oberbegriffen der Patentansprüche 1 und 2.

Eine derartige Befestigungsanordnung ist aus der nicht näher bezeichneten Veröffentlichung der VDO Vertriebsgesellschaft mbH, Bad Soden, "Ladegewichts-Kontrollanlage, Achslast-Kontrollanlage", dort insbesondere S. 11, bekannt. Dort wird beschrieben, wie ein als Sensorträger eines als Geber für Achsbelastungen geeichten Verformungssensors an Anschraubstellen mittels je einer Kopfschraube an einem hinsichtlich seiner Verformungen überwachten zweiten Bauteil befestigtwird, welches als Achsgehäuse ausgebildet ist.

Bei der bekannten Anordnung liegen die Schraubenköpfe der Kopfschrauben während des Festziehens und danach direkt auf den Anschraubstellen des Sensorträgers auf. Durch die während des Festziehens der Kopfschrauben an den Anschraubstellen des Sensorträgers von den Schraubenköpfen hervorgerufenen Reibkräfte wird der Sensorträger im wesentlichen in Form eines "S" verformt. Der Verformungssensor erfaßt diese Verformung als Grundverformung und liefert ein entsprechendes elektrisches Grundsignal.

Bei unsachgemäßer Montage kann dieses Grundsignal einen wesentlichen Teil des Arbeitsbereichs des Verformungssensors einnehmen, so daß dessen verbleibender Arbeitsbereich für die Erfassung der betriebsmäßig auftretenden Verformungen nicht bzw. nur mit eingeschränkter Genauigkeit ausreicht. Infolge von Setzungserscheinungen, insbesondere unter dem Einfluß dynamischer Laständerungen, kann eine Rückbildung der Grundverformung auftreten, die eine Veränderung des Grundsignals und damit ebenfalls Meßungenauigkeiten bzw. zusätzliche Meßungenauigkeiten zur Folge haben kann.

Bei der beschriebenen Anordnung wird der Verformungssensor mit dem hinsichtlich seiner Verformungen überwachten zweiten Bauteil (Achsgehäuse) kraftschlüssig verbunden. Dieser Kraftschluß kann durch die erwähnten dynamischen Laständerungen gemindert werden, woraus eine weitere Ursache für Meßungenauigkeiten resultieren kann.

Man könnte daran denken, die Nachteile der beschriebenenAnordnung durch Verschweißen des Sensorträgers mit dem zweiten Bauteil zu überwinden. Die durch das Schweißen hervorgerufenen Eigenspannungen führen jedoch ebenfalls zu einem Grundsignal, welches bei unsachgemäßer Ausführung der Schweißung einen unannehmbar großen Anteil des Arbeitsbereichs des Verformungssensors ausfüllen kann. Nachteilig ist auch der zeitliche Abbau der genannten Eigenspannungen, insbesondere bei dynamischen Laständerungen, der zu Meßungenauigkeiten bzw. zu weiteren Meßungenauigkeiten führen kann. Auch kann das Schweißen an einem Sicherheitsteil, wie es ein Achsgehäuse darstellt, wegen der Eigenspannungen problematisch sein. Schließlich hat das Schweißen noch den Nachteil, daß ein Auswechseln des Verformungssensors nur mit großem Aufwand möglich ist.

Ein erstes Bauteil kann auf die beschriebenen Arten auch mit zwei zweiten Bauteilen verbunden sein, deren Verschiebungen gegeneinander es überwacht. Auch in diesem Fall ist mit den vorstehend erwähnten, durch die Befestigungseinrichtung bedingten Nachteilen zu rechnen.

In anderen Fällen, beispielsweise bei einem Werkstückhalter als erstem Bauteil und einem Werkzeugmaschinenbett als zweitem Bauteil, kommt es darauf an, die gegenseitige Lage der Bauteile, auch beim Auftreten dynamischer Einflüsse, sicher dauerhaft festzulegen. Auch dieses Problem kann mit einer Einrichtung der eingangs genannten Art nicht ohne weiteres beherrschbar sein.

Aus der US-A-4 056 273 ist eine Befestigungsanordnung eines ersten Bauteiles an einem zweiten Bauteil bekannt, in der das als Befestigungsschelle ausgebildete erste Bauteil über zwei Kopfschrauben mit zwei als Klemmstücken ausgebildeten zweiten Bauteilen verbindbar ist. Zwischen dem ersten Bauteil und den Schraubenköpfen der Kopfschrauben ist eine gemeinsame Schraubenunterlage angeordnet. Die Schraubenunterlage und das zweite Bauteil sind an ihren jeweiligen dem Einspannbereich des ersten Bauteils gegenüberliegenden Bereichen als Stempel und Gegenstempel nach Art eines Formstanzwerkzeugs ausgebildet, zwischen denen der Einspannbereich des ersten Bauteiles beim Festziehen der Kopfschrauben unter Herstellung eines Formschlusses mit dem zweiten Bauteil verformt wird. Die Schraubenunterlage ist ständig drehfest gelagert. Vor dem Festziehen der Kopfschrauben beruht dies darauf, daß sie sich drehfest an den Kopfschrauben abstützt. Nach dem Festziehen der Kopfschrauben beruht dies zusätzlich auf dem Formschluß zwischen der Schraubenunterlage und dem zweiten Bauteil unter Zwischenschaltung des ersten Bauteils.

Der vorliegenden Erfindung liegt die Aufgabe zugrunde, eine Befestigungsanordnung der eingangs genannten Art mit einfachen Mitteln so zu verbessern, daß sie eine weitgehend grundverformungsfreie Verbindung bzw. eine sichere Lagefixierung zwischen erstem und zweitem Bauteil bzw. zweiten Bauteilen gewährleistet, die darüber hinaus frei von Setzungserscheinungen ist und sich unter dem Einfluß dynamischer Laständerungen nicht verändert.

Diese Aufgabe wird durch die in den Patentansprüchen 1 und 2 angegebene Erfindung gelöst. Weiterbildungen und besonders kostengünstige Ausgestaltungen der Erfindung sind in den Unteransprüchen angegeben.

Die Erfindung beruht sinngemäß auf dem Gedanken, das erste Bauteil vom Anzugsmoment der Kopfschraube zu isolieren, zwischen erstem und zweitem Bauteil eine formschlüssige Verbindung zu schaffen und beide Merkmale bei der Herstellung der Verbindung gemeinsam zu verwirklichen.

Der Formschluß kann dabei insbesondere zur Fixierung des ersten Bauteils in einer bevorzugten Richtung, insbesondere einer Meßrichtung, aber auch zu seiner Fixierung in allen anderen Richtungen dienen.

Die Erfindung läßt sich derart realisieren, daß Anschraubstellen und zugeordnete Einspannbereiche des ersten Bauteils nebeneinander oder exzentrisch zueinander und damit auch Kopfschraube und formstanzwerkzeugartige Ausbildung von Schraubenunterlage und zweitem Bauteil nebeneinander oder exzentrisch zueinander liegen.

Bei nebeneinander oder exzentrisch zueinander angeordneter Kopfschraube und Einspannbereich können diese so zueinander angeordnet sein, daß die Kopfschraube das erste Bauteil durchdringen muß oder außerhalb des ersten Bauteils liegen kann. Im letztgenannten Fall kann das erste Bauteil an der Einspannstelle durchbrochen mit der Möglichkeit der Teilung (Schlitzung) oder durchgehend sein. Eine durchbrochene Einspannstelle verbessert die Verformbarkeit und/oder die Spannungsfreiheit, eine durchgehende Einspannstelle bringt, wo sie vom Einsatzfall her ertragbar ist, eine Verringerung des Herstellaufwandes und damit der Kosten.

Eine besonders bedeutende Verringerung der Grundverformung des ersten Bauteils läßt sich durch Teilung der Einspannbereiche erzielen. Bei dieser Ausbildung sind die Einspannbereiche besonders leicht durch Stanzen verformbar.

Sind erstes und zweites Bauteil durch zwei Kopfschrauben verbunden, so kann die Teilung vorzugsweise im wesentlichen in Richtung der Verbindungslinie der Mitten der Anschraubstellen verlaufen. Bei dieser Ausbildung erfolgt die Verformung der Einspannbereiche durch die formstanzenartige Ausbildung von Schraubenunterlage und zweitem Bauteil nahezu ausschließlich quer zu der genannten Verbindungslinie und damit in einer unter dem Gesichtspunkt der Grundverformung unschädlichen Richtung.

Die Erfindung läßt sich in vorteilhafter Weise kostengünstig realisieren, da die formstanzenartige Ausbildung von Schraubenunterlage und zweitem Bauteil einfach herstellbare geometrische Formen beinhalten kann und der Mittenabstand von Anschraubstellen des ersten Bauteils einerseits sowie der Mittenabstand von Schraubenlöchern in zweiten Bauteil andererseits sowie das oder die Schraubenlöcher im ersten Bauteil mit großen Toleranzen gefertigt werden können. Deshalb können das oder die Schraubenlöcher (einschließlich etwaiger Ansenkungen zur Ausbildung von Formstanzkonturen) ohne Bohrvorrichung eingebracht werden, wodurch sich auch eine Nachrüstung vorteilhaft durchführen läßt. Auch ein Austausch des ersten Bauteils läßt sich dadurch besonders einfach durchführen.

Wie für den Fachmann ersichtlich, läßt sich die Erfindung in allen Einsatzfällen vorteilhaft anwenden, in denen es gilt, Verformungen eines Bauteils oder Verschiebungen zweier Bauteile gegeneinander in Meßrichtung eines Verformungssensors zu messen. Beispielhaft seien Dehnungsmessungen an Prüfstäben in Dauerversuchen oder Überwachung der Abstände von Stäben in Stahlbauwerken erwähnt. Solange sich die den Verformungen bzw. Verschiebungen zugrunde liegenden Beanspruchungen des bzw. der Bauteile im elastischen Bereich abspielen, kann das vorzugsweise elektrische Ausgangssignal des Verformungssensors in Spannungs-, Kraft-, Biegemoment-, Drehmomenteinheiten oder dergleichen geeicht sein.

In einer bevorzugten Ausführungsform ist die Erfindung mit einem Verformungssensor verwirklicht, dessen Sensorträger als erstes Bauteil aus Blech besteht. Das erste Bauteil kann aber auch auf jede andere geeignete Weise ausgebildet sein, sofern es nur im Bereich der Einspannflächen, sei es durch Materialwahl oder durch konstruktive Gestaltung, weich genug zur Verformung durch Stanzen ist.

Der Sensorträger als erstes Bauteil kann vor dem Einbau an den Einspannbereichen ebene Oberflächen aufweisen. Er kann an den genannten Oberflächen aber auch weitgehend beliebig gestaltet sein. Er kann beispielsweise an den genannten Oberflächen Vorverformungen tragen, die seine Ausrichtung bei der Montage, z.B. mittels Manipulatoren, vereinfachen.

Der Verformungssensor kann Bestandteil eines aus mehreren Sensoren bestehende Meßsystems sein.

Eine besonders kostengünstige Gesamtanordnung ergibt sich, wenn die Schraubenunterlage zugleich als Abdeckhaube des ersten Bauteils ausgebildet ist.

Die drehfeste Lagerung der Schraubenunterlage kann besonders einfach dadurch hergestellt werden, daß die Schraubenunterlage in einem Auflagebereich zum zweiten Bauteil komplementär zu dessen Oberflächenverlauf gestaltet ist. Beispielsweise kann bei einem zweiten Bauteil mit konvexer Oberfläche, wie es ein Achsgehäuse darstellt, die Schraubenunterlage mit einem dem komplementären, konkaven Auflagebereich auf dem zweiten Bauteil aufliegen und dadurch diesem gegenüber drehfest sein.

Weitere kostengünstige Gestaltungsmöglichkeiten ergeben sich, wenn die Schraubenunterlage in einen drehfest gegenüber dem zweiten Bauteil gelagerten ersten Unterlagenteil und einem den als Stempel oder Gegenstempel ausgebildeten Bereich aufweisenden zweiten Unterlagenteil aufgeteilt ist, in welchem Falle ersterer als Abdeckhaube des ersten Bauteiles und letzterer als Druckstück ausgebildet sein kann.

Die Erfindung wird nachstehend anhand von Ausführungsbeispielen, welche in den Zeichnungen dargestellt sind, erläutert, wobei Teile gleicher Funktionen in allen Zeichnungen mit gleichen Bezugszeichen bezeichnet werden.

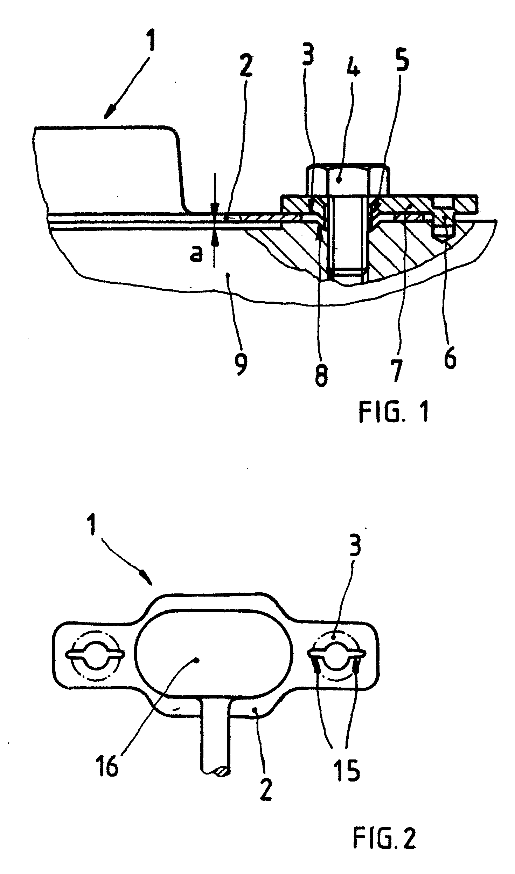

Es zeigen
Fig. 1
eine Anordnung eines Verformungssensors an einen Achsgehäuse,
Fig. 2
die Draufsicht auf den Verformungssensor nach Fig. 1,
Fig. 3
eine weitere Anordnung des Verformungssensors,
Fig. 4 und Fig. 5
Anordnungen wie Fig. 1, und jedoch mit geteilten Schraubenunterlagen.

Dabei werden für Bauteile mit gleichen Funktionen durchgehend gleiche Bauteile verwendet.

Fig. 1 zeigt einen Verformungssensor 1, der zur Erfassung der Belastung eines Bauteils über Schraubverbindungen mit diesem verbunden ist, wobei das zweite Bauteil als durch das Bezugszeichen 9 symbolisiertes Achsgehäuse ausgebildet ist. Durch Lage und Richtung des Verformungssensors 1 am Achsgehäuse 9 wird der Prüfbereich am Achsgehäuse 9 und dessen überwachte Verformungsund Beanspruchungsrichtung bestimmt. Bei Anordnung des Verformungssensors 1 mit vertikal orientierten Schraubverbindungen kann der Verformungssensor beispielsweise zur Erfassung der jeweiligen Achslast dienen.

Der Verformungssensor 1 weist einen aus Blech geformten, als erstes Bauteil dienenden Sensorträger 2 auf, in dem, wie in Fig. 2 dargestellt, ein Meßelement 16 mit elektrischen Zuleitungen aufgenommen ist. Der Sensorträger 2 weist beiderseits des Meßelementes 16 je ein nicht näher bezeichnetes ausgestanztes Schraubenloch auf. Ein konzentrisch zu jedem Schraubenloch angeordneter Oberflächenbereich des Sensorträgers 2 dient als Anschraubstelle, die zugleich als Einspannbereich ausgebildet ist. Im folgenden wird als Sammelbezeichnung für jeden dieser Bereiche der Begriff "Einspannbereich 3" verwendet.

Der Sensorträger 2 ist an den Einspannbereichen 3 mittels je einer Kopfschraube 4 an dem Achsgehäuse 9 befestigt. Die Einzelheiten dieser Befestigung werden anhand der in Fig. 1 im Schnitt dargestellten rechten Seite erläutert und gelten für die nicht dargestellte linke Seite entsprechend. Der Sensorträger 2 ist über eine sein Schraubenloch durchdringende Kopfschraube 4 mit dem Achsgehäuse 9 verbunden. Der Sensorträger 2 liegt dabei mit der Unterseite seines Einspannbereichs 3 auf einer nicht näher bezeichneten Auflagefläche des Achsgehäuses 9 auf, von welcher ausgehend eine Gewindebohrung zur Aufnahme des Gewindes der Kopfschraube 4 in den Achskörper 9 eindringt. Am Übergang der Gewindebohrung zur Auflagefläche weist das Achsgehäuse 9 konzentrisch zur Gewindebohrung eine kegelige Ansenkung 8 auf.

Zwischen der Oberseite des Einspannbereichs 3 des Sensorträgers 2 und dem Schraubenkopf der Kopfschraube 4 ist eine Schraubenunterlage 7 angeordnet, die ebenfalls ein Schraubenloch aufweist, welches von der Kopfschraube 4 durchdrungen wird.

Das Achsgehäuse 9 weist neben dem Schraubenloch eine weitere Bohrung auf. In diese Bohrung dringt eine von der dem Schraubenkopf der Kopfschraube 4 zugewandten Oberseite der Schraubenunterlage 7 her teildurchgestanzte Zentrierwarze 6 der Schraubenunterlage 7 ein. Dadurch ist die Schraubenunterlage 7 mit dem Achsgehäuse 9 drehfest verbunden. Zur drehfesten Verbindung können das Achsgehäuse 9 und die Schraubenunterlage in nicht dargestellter Weise mittels eines Paßstiftes verstiftet sein.

Konzentrisch zum Schraubenloch weist die Schraubenunterlage 7 an ihrer Oberseite eine durch einen Prägevorgang erzeugte kegelige Ansenkung auf. Das beim Prägevorgang an der Oberseite der Schraubenunterlage 7 eingedrückte Material hat sich an der dem Einspannbereich 3 des Sensorträgers 2 zugewandten Unterseite der Schraubenunterlage 7 aufgebaut und bildet eine konzentrisch zum Schraubenloch in der Schraubenunterlage 7 umlaufende Lippe 5, die zur kegeligen Ansenkung 8 im Achsgehäuse 9 komplementär ist. Aufgrund der beschriebenen Ausbildung von kegeliger Ansenkung 8 und kegeliger Lippe 5 bilden die Schraubenunterlage 7 einen Stempel und das Achsgehäuse 9 einen Gegenstempel nach Art eines Formstanzwerkzeugs. Beim Festziehen der Kopfschraube 4 wird das zwischen Schraubenunterlage 7 und Achsgehäuse 9 lagernde Sensorgehäuse 2 in seinem Einspannbereich 3 entsprechend der komplementären Konturen von Stempel und Gegenstempel derart verformt, daß das Sensorgehäuse 2 nach dem Festziehen der Kopfschraube 4 an dem Einspannbereich 3 einen kegeligen Kragen aufweist, mit dem es in die kegelige Ansenkung 8 des Achsgehäuses 9 eindringt.

Der Verformungssensor 1 hat im vorliegenden Fall die Aufgabe, Längenänderungen des Achsgehäuses 9 in Richtung der Verbindungslinie der Mitten der Anschraubstellen zu erfassen und davon abhängige elektrische Signale an eine Auswerteeinrichtung zu liefern, in der diese als Belastungssignale verarbeitet werden. Im vorliegenden Fall wird also durch die Verbindungslinie der Mitten der Anschraubstellen eine Meßrichtung des Verformungssensors 1 definiert.

Wie Fig. 2 zeigt, ist der Einspannbereich 3 auf jeder Seite des Sensorträgers 2 ausgehend von dem jeweiligen Schraubenloch durch im wesentlichen in Meßrichtung angeordnete Schlitze 15 geteilt. Dadurch erfolgt die oben beschriebene Verformung des Einspannbereichs 3 des Sensorträgers 2 beim Festziehen der Kopfschraube 4 hauptsächlich quer zur Meßrichtung mit dem Ergebnis, daß die Grundverformung des Achslastsensors in Meßrichtung besonders wirksam gemindert wird.

Es liegt auf der Hand, daß die Grundverformung durch die genannte Teilung auch bei Anordnungen des Verformungssensors mit Meßrichtungen außerhalb der genannten Verbindungslinie stark herabgesetzt wird.

Außerhalb der beschriebenen Befestigungen sind der Sensorträger 2 und das Achsgehäuse 9 um einen durch "a" gekennzeichneten Abstand voneinander entfernt, damit zwischen beiden keine die Meßergebnisse beeinflussenden Reibungskräfte auftreten können.

Durch die oben beschriebene drehfeste Lagerung der Schraubenunterlage 7 an dem Achsgehäuse 9 wird verhindert, daß beim Festziehen der Kopfschraube 4 Reibkräfte in Drehrichtung der Kopfschraube 4 in den Sensorträger 2 eingeleitet werden, wodurch die Entstehung einer Grundverformung des Sensorträgers 2 beim Festziehen der Kopfschraube 4 verhindert oder die Gefahr der Entstehung einer solchen Grundverformung wenigstens minimiert wird. Durch das Eindringen des beim Festziehen der kopfschraube 4 am Sensorträger 2 gebildeten kegeligen Kragens in die kegelige Ansenkung 8 des Achsgehäuses 9 wird eine formschlüssige Verbindung zwischen Sensorträger 2 und Achsgehäuse 9 erzielt, die im Einsatz keine Setzungserscheinungen und Veränderungstendenzen zeigt.

Die Ansenkung im Achsgehäuse kann in nicht dargestellter Weise auch zylindrisch sein, in welchem Fall die umlaufende Lippe in der Unterseite der Schraubenunterlage vorzugsweise ebenfalls zylindrisch ausgebildet sein kann. Sind Lippe und Ansenkung im Achsgehäuse zylindrisch ausgebildet, ist auch der am Sensorgehäuse gebildete Kragen zylindrisch.

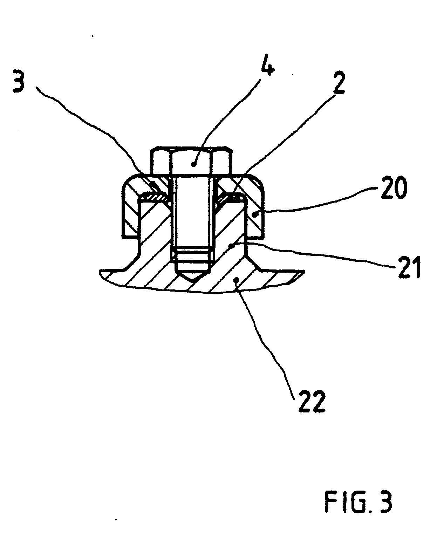

Fig. 3 zeigt ein weiteres Ausführungsbeispiel für eine Befestigung des Verformungssensors 1 an einem in diesem Falle mit dem Bezugszeichen 22 belegten Achsgehäuse. Das Achsgehäuse 22 weist in diesem Falle angegossene Auflagestutzen 21 auf.

Die in der Beschreibung des Ausführungsbeispiels nach den Figuren 1 und 2 gegebenen Erläuterungen gelten auch für das Ausführungsbeispiel nach Fig. 3 mit Ausnahme der Ausbildung der Schraubenunterlage, die hier mit 20 bezeichnet ist. Die Schraubenunterlage 20 weist abgewinkelte Seiten auf, mit denen sie sich an die Seitenflächen des Aufnahmestutzens 21 anlegt, wodurch die drehfeste Lagerung der Schraubenunterlage 20 am Achsgehäuse 22 hergestellt wird.

Es liegt auf der Hand, daß, wenn in diesem Ausführungsbeispiel die dabei auftretenden Eigenspannungen nicht zu einer untragbar hohen Grundverformung des Verformungssensors 1 führen, der Auflagestutzen 21 an das Achsgehäuse 22 auch angeschweißt sein kann. Die vorstehend beschriebenen Ausführungsbeispiele lassen sich kostengünstig herstellen. Einerseits kann der Sensorträger 2 hinsichtlich des Abstands der Schraubenlöcher mit großen Toleranzen hergestellt werden, da die Zentrierung und Fixierung des Verformungssensors 1 beim Herstellen der Schraubenverbindung erfolgt. Andererseits erfordert die Ausbildungvon Schraubunterlage 7 bzw. 20 und Achsgehäuse 9 bzw. 22 nach Art eines Formstanzwerkzeugs keine zusätzlichen Arbeitsgänge, da diese sich beim Herstellen der Gewindebohrung im Achsgehäuse 9 bzw. 22 beim Herstellen des Schraubenlochs in der Schraubenunterlage 7 bzw. 22 mit anderen Arbeitsgängen kombinieren lassen. Im Falle des Ausführungsbeispiels nach Fig. 3 läßt sich auch das Abwinkeln der Seiten der Schraubenunterlage 20 mit dem Arbeitsgang des Lochens und Prägens kombinieren.

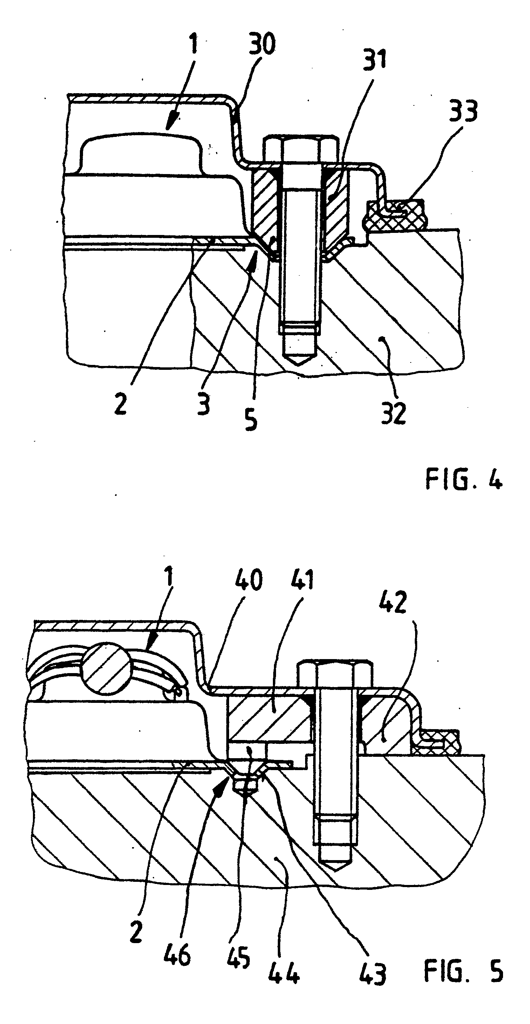

Fig. 4 zeigt ein weiteres Ausführungsbeispiel für eine Befestigung des Verformungssensors 1 an einem, in diesem Falle mit den Bezugszeichen 32 belegten, Achsgehäuse. Die Schraubenunterlage 30, 31 ist in diesem Fall geteilt und besteht aus einem als Abdeckhaube 30 des Verformungssensors 1 und damit des Sensorträgers 2 ausgebildeten ersten Unterlagenteil und einem als Druckstück 31 ausgebildeten zweiten Unterlagenteil. Das Druckstück 31 ist konzentrisch zur Kopfschraube zwischen Abdeckhaube 30 und Verformungssensor 2 eingespannt und trägt an seinem dem Sensorgehäuse 2 zuweisenden Ende die umlaufende Lippe 5. In seiner räumlichen Ausdehnung vor und hinter der Zeichnungsebene weist das Achsgehäuse 32 eine konvexe, im wesentlichen zylindrische, Oberflächengestaltung auf. An ihrer äußeren Begrenzung weist die Abdeckhaube 30 einen mit 33 bezeichneten umlaufenden Flansch auf, der der konvexen Oberfläche des Achsgehäuses 32 folgt und einen zu dieser komplementären, konkaven Auflagebereich der Schraubenunterlage 30, 31 bildet. Infolge der komplementären Oberflächenausbildung ist die Abdeckhaube 30 gegenüber dem Achsgehäuse 32 drehfest gelagert. Mittels einer über den Flansch 33 gezogenen, nicht näher bezeichneten umlaufende Dichtung ist der zwischen Abdeckhaube 30 und Achskörper 32 eingeschlossene, den Verformungssensor 1 enthaltende, Raun nach außen abgedichtet. Dem gleichen Zweck dient ein nicht näher bezeichneter, zwischen Abdeckhaube 30 und Druckstück 31 eingespannter Dichtring.

Auch Fig. 5 zeigt ein Ausführungsbeispiel für eine Befestigung des Verformungssensors 1 mit einer geteilten Schraubenunterlage 40, 41. In diesem Fall endet das Sensorgehäuse 2 außerhalb der Kopfschraube und wird von dieser nicht durchdrungen.

Das erste Unterlagenteil ist wieder als Abdeckhaube, in diesem Fall mit 40 bezeichnet, ausgebildet und schließt neben dem Verformungssensor 1 das als Druckstück 41 ausgebildete zweite Unterlagenteil ein. Das Druckstück 41 wird von der Kopfschraube durchdrungen, ist jedoch nicht konzentrisch zu dieser ausgebildet und angeordnet und stützt sich beiderseits derselben an dem hier mit 44 bezeichneten Achsgehäuse ab. Mit seiner einen Seite überdeckt das Druckstück 41 den hier mit 46 bezeichneten Einspannbereich des Sensorgehäuses 2. An dieser Seite erfolgt die Abstützung des Druckstückes 41 über einen mit dem Druckstück verbundenen kegelig zulaufenden Zapfen 45, der einen als Stempel ausgebildeten Bereich desselben darstellt und der mit einer zu seinem Kegel komplementären Vertiefung 43 im Achsgehäuse 44 die Formstanzkontur bildet, zwischen der der Einspannbereich 46 beim Abstützen des Druckstücks 41 eingespannt und verformt wird.

An seiner anderen Seite erfolgt die Abstützung des Druckstückes 41 über eine angeformte Stützstelle 42 direkt auf dem Achsgehäuse 44.

Es liegt auf der Hand, daß in diesem Ausführungsbeispiel das Sensorgehäuse 2 auch bis unter die Stützstelle 42 durchgezogen sein kann, wodurch sich in diesem Fall das Druckstück 41 auch an dieser Stelle über das Sensorgehäuse am Achsgehäuse 44 abstützen würde.

In diesem Fall würde das Sensorgehäuse auch , wie in den anderen Ausführungsbeispielen, von der Kopfschraube durchdrungen.

Im übrigen gelten für das Ausführungsbeispiel Fig. 5 die Ausführungen zum Ausführungsbeispiel Fig. 4 entsprechend.

Darüber hinaus gelten für die Ausführungsbeispiele nach den Fig. 4 und 5 die zu den früheren Ausführungsbeispielen gemachten Ausführungen in entsprechender Weise.

Es liegt auf der Hand, daß mit den vorstehend beschriebenen Ausführungsbeispielen der Anwendungsbereich der vorliegenden Erfindung nicht erschöpfend beschrieben ist. Insbesondere kann die Erfindung statt, wie vorstehend beschrieben, mit Sechskantkopfschrauben, auch mit jeder anderen Art Kopfschrauben, beispielsweise Senkschrauben, vorteilhaft verwirklicht werden.

Ferner kann die Erfindung insbesondere statt, wie in den vorstehend beschriebenen Ausführungsbeispielen, mit als Gegenstempel ausgebildetem zweiten Bauteil und mit als Stempel ausgebildeter Schraubenunterlage derart ausgeführt werden, daß das zweite Bauteil als Stempel und die Schraubenunterlage als Gegenstempel dient.

**Ansprüche**

1. Befestigungsanordnung eines ersten Bauteiles an einem zweiten Bauteil, insbesondere des Sensorträgers eines Verformungssensors an einem Bauteil, dessen Verformungen er überwacht, oder an zwei Bauteilen, deren Verschiebungen gegeneinander er überwacht, wobei das erste Bauteil an wenigstens einer Anschraubstelle über wenigstens eine Kopfschraube mit dem zweiten Bauteil verbindbar ist,
   gekennzeichnet durch folgende Merkmale :
   a) das erste Bauteil (2) ist an wenigstens einem der Anschraubstelle zugeordneten Einspannbereich (3) durch Stanzen verformbar ausgebildet;
   b) zwischen dem Schraubenkopf der wenigstens einen Kopfschraube (4) und der jeweiligen Anschraubstelle des ersten Bauteiles ist eine durch direkte Abstützung an dem zweiten Bauteil (9, 22,32) ständig drehfest gelagerte Schraubenunterlage (7; 20; 30, 31) vorgesehen, die auch den zugeordneten Einspannbereich (3) überdeckt;
   c) die Schraubenunterlage (7;20;30, 31) und das zweite Bauteil (9, 22, 32) sind an ihren jeweiligen dem Einspannbereich (3) des ersten Bauteils (2) gegenüberliegenden Bereichen als Stempel und Gegenstempel bzw. umgekehrt nach Art eines Formstanzwerkzeugs ausgebildet, zwischen denen der Einspannbereich (3) des ersten Bauteiles (2) beim Festziehen der Kopfschraube unter Herstellung eines Formschlusses mit dem zweiten Bauteil (9, 22, 32) verformt wird.

2. Befestigungsanordnung eines ersten Bauteiles an einem zweiten Bauteil, insbesondere des Sensorträgers eines Verformungssensors an einem Bauteil, dessen Verformungen er überwacht, oder an zwei Bauteilen, deren Verschiebungen gegeneinander er überwacht, wobei das erste Bauteil über wenigstens eine in das zweite Bauteil eindringende oder dieses durchdringende Kopfschraube mit dem zweiten Bauteil verbindbar ist, gekennzeichnet durch die folgenden Merkmale:

a) das erste Bauteil (2) ist an wenigstens einem der Kopfschraube zugeordneten Ein-spannbereich (46) durch Stanzen verform-bar ausgebildet;

b) zwischen dem Schraubenkopf der wenigstens einen Kopfschraube (4) und dem zweiten Bauteil (44) ist eine durch direkte Abstützung an dem zweiten Bauteil (44) ständig drehfest gelagerte Schraubenunterlage (40, 41) vorgesehen, die auch den zugeordneten Einspannbereich (46) überdeckt;

c) die Schraubenunterlage (40, 41) und das zweite Bauteil (44) sind an ihren jeweiligen dem Einspannbereich (46) des ersten Bauteils (2) gegenüberliegenden Bereichen als Stempel und Gegenstempel bzw. umgekehrt nach Art eines Formstanzwerkzeugs ausgebildet, zwischen denen der Einspannbereich (46) des ersten Bauteils (2) beim Festziehen der Kopfschraube unter Herstellung eines Formschlusses mit dem zweiten Bauteil (44) verformt wird.

3. Befestigungsanordnung nach einem der Ansprüche 1 oder 2, dadurch gekennzeichnet, daß die Schraubenunterlage (30, 31; 40, 41) in einen drehfest gegenüber dem zweiten Bauteil (32, 44) gelagerten ersten Unterlagenteil (30, 40) und einen den als Stempel bzw. Gegenstempel ausgebildeten Bereich aufweisenden zweiten Unterlagenteil (31, 41) aufgeteilt ist.

4. Befestigungsanordnung nach einem der Ansprüche 1 oder 3, dadurch gekennzeichnet , daß jede Anschraubstelle des ersten Bauteils (2) mit dem zugeordneten Einspannbereich (3) zusammenfällt und daß die Ausbildung von Schraubenunterlage (7; 20; 30, 31) und zweitem Bauteil (9, 22, 32) nach Art eines Formstanzwerkzeugs im wesentlichen konzentrisch zur Kopfschraube (4) angeordnet ist.

5. Befestigungsanordnung nach einem der Ansprüche 1 oder 3, dadurch gekennzeichnet , daß die Kopfschraube (4) koaxial zu dem zugeordneten Einspannbereich (3) des ersten Bauteils (2) angeordnet ist.

6. Befestigungsanordnung nach einem der Ansprüche 2 oder 3, dadurch gekennzeichnet , daß der Einspannbereich (46) außerhalb der zugeordneten Kopfschraube liegt.

7. Befestigungsanordnung nach einem der Ansprüche 1 oder 3 bis 5, dadurch gekennzeichnet , daß die Formstanzkontur im als Gegenstempel dienenden zweiten Bauteil (9, 22, 32) als kegelige oder ballige oder kugelige Ansenkung (8) konzentrisch zum Schraubenloch und in der als Stempel dienenden Schraubenunterlage (7; 20; 30, 31) als dazu komplementäre kegelige oder ballige oder kugelige konzentrisch zum Schraubenloch umlaufende Lippe (5) ausgebildet ist.

8. Befestigungsanordnung nach einem der Ansprüche 1 oder 3 bis 5, dadurch gekennzeichnet , daß die Formstanzkontur im als Gegenstempel dienenden zweiten Bauteil als zylindri-sche Ansenkung konzentrisch zum Schrauben-loch und in der als Stempel dienenden Schra-benunterlage als dazu komplementäre zylindri-sche konzentrisch zum Schraubenloch umlau-fende Lippe ausgebildet ist.

9. Befestigungsanordnung nach einem der Ansprüche 7 oder 8, dadurch gekennzeichnet, daß die Lippe (5) in der Schraubenunterlage (7, 20) durch einen Prägevorgang von der dem Schraubenkopf zugewandten Fläche der Schraubenunterlage (7, 20) her erzeugt wird.

10. Befestigungsanordnung nach Anspruch 6, da-durch gekennzeichnet, daß die Formstanzkon-tur in dem als Gegenstempel dienenden zweiten Bauteil (44) als zylindrische oder kegelförmig zulaufende Vertiefung (43) und in der als Stempel dienenden Schraubenunterlage (40, 41) als dazu komplementärer zylindrischer oder kegelig oder ballig oder kugelig zulaufender Zapfen (45) ausgebildet ist.

11. Befestigungsanordnung nach einem der Ansprüche 1, 3 oder 7 bis 9, dadurch gekennzeichnet, daß das zweite Unterlagenteil (31) als konzentrisch zur Kopfschraube zwischen erstem Unterlagenteil (30) und erstem Bauteil (2) eingespanntes Druckstück ausgebildet ist.

12. Befestigungsanordnung nach einem der Ansprüche 3, 6 oder 10, dadurch gekennzeichnet, daß das zweite Unterlagenteil (41) als zwischen dem ersten Unterlagenteil (40) und dem Schraubenloch angeordnetes Druckstück ausgebildet ist, welches sich einerseits der Kopfschraube mit seinem als Stempel bzw. Gegenstempel ausgebildeten Bereich über die Einspannfläche (46) des ersten Bauteils (2) und andererseits der Kopfschraube an wenigstens einer weiteren Stelle direkt oder über das erste Bauteil (2) an dem zweiten Bauteil (44) abstützt.

13. Befestigungsanordnung nach einem der vorhergehenden Ansprüche, dadurch gekennzeichnet, daß das erste Bauteil (2) zwei Anschraubstellen aufweist und daß der jeder Anschraubstellezugeordnete Einspannbereich (3) des ersten Bauteils (2) im wesentlichen in Richtung der Verbindungslinie der Mitten der Anschraubstellen geteilt ist.

14. Befestigungsanordnung nach einem der vorhergehenden Ansprüche , dadurch gekennzeichnet, daß das erste Bauteil (2) mit zwei Kopfschrauben befestigt ist und daß der jeder Kopfschraube zugeordnete Einspannbereich (46) des ersten Bauteils (2) im wesentlichen in Richtung der Verbindungslinie der Mitten der Kopfschrauben geteilt ist.

15. Befestigungsanordnung nach einem der vorhergehenden Ansprüche, dadurch gekennzeichnet, daß die Schraubenunterlage (30,31; 40, 41) zugleich als Abdeckhaube des ersten Bauteils (2) ausgebildet ist.

16. Befestigungsanordnung nach Anspruch 15, dadurch gekennzeichnet, daß das erste Unterlagenteil (30, 40) als Abdeckhaube ausgebildet ist.

17. Befestigungsanordnung nach einem der vorhergehenden Ansprüche, dadurch gekennzeichnet, daß der Jeder Kopfschraube zugeordnete wenigstens eine Einspannbereich (46) des ersten Bauteils (2) geteilt ist.

18. Befestigungsanordnung nach einem der vorhergehenden Ansprüche, dadurch gekennzeichnet, daß der jeder Anschraubstelle zugeordnete wenigstens eine Einspannbereich (3) des ersten Bauteils (2) geteilt ist.

**Claims**

1. An arrangement for fastening a first component to a second component, in particular for fastening the sensor carrier of a deformation sensor to a component, the deformations of which the sensor is monitoring, or to two components, the displacements of which relative to one another the sensor is monitoring, the first component being arranged to be joined at at least one screw-fixing point by way of at least one cap screw to the second component, characterized by the following features:

   a) the first component (2) is constructed to be deformable by stamping at at least one clamping region (3) associated with the screw-fixing point;
   b) between the screw head of the cap screw (4), of which there is at least one, and the particular screw-fixing point of the first component there is provided a screw spacer (7; 20; 30, 31) permanently non-rotatably mounted by direct support on the second component (9, 22, 32), which screw spacer also covers the associated clamping region (3);
   c) the screw spacer (7; 20; 20,31) and the second component (9, 22, 32) are constructed at their respective regions opposite the clamping region (3) of the first component (2) as a punch and counter-punch, or vice versa, like an embossing die, between which the clamping region (3) of the first component (2) is deformed as the cap screw is tightened to produce a positive engagement with the second component (9, 22, 32).

2. An arrangement for fastening a first component to a second component, in particular for fastening the sensor carrier of a deformation sensor to a component, the deformations of which the sensor is monitoring, or to two components, the displacements of which relative to one another the sensor is monitoring, the first component being arranged to be joined to the second component by way of at least one cap screw penetrating into the second component or passing right through it, characterized by the following features:

   a) the first component (2) is constructed to be deformable by stamping at at least one clamping region (46) associated with the cap screw;
   b) between the screw head of the cap screw (4), of which there is at least one, and the second component (44) there is provided a screw spacer (40, 41) permanently non-rotatably mounted by direct support on the second component (44), which screw spacer also covers the associated clamping region (46);
   c) the screw spacer (40, 41) and the second component (44) are constructed at their respective regions lying opposite the clamping region (46) of the first component (2) as a punch and counter-punch, or vice versa, like an embossing die, between which the clamping region (46) of the first component (2) is deformed as the cap screw is tightened to produce a positive engagement with the second component (44).

3. A fastening arrangement according to one of claims 1 or 2, characterized in that the screw spacer (30, 31; 40, 41) is divided into a first screw spacer part (30, 40) mounted non-rotatably with respect to the second component (32, 44), and a second screw spacer part (31, 41) having a region constructed as a punch or counter-punch.

4. A fastening arrangement according to one of claims 1 or 3, characterized in that each screw-fixing point of the first component (2) coincides with the associated clamping region (3), and the construction of the screw spacer (7; 20; 30, 31) and the second component (9, 22, 32) like an embossing die is arranged substantially concentrically with the cap screw (4).

5. A fastening arrangement according to one of claims 1 or 3, characterized in that the cap screw (4) is arranged coaxially with the associated clamping region (3) of the first component (2).

6. A fastening arrangement according to one of claims 2 or 3, characterized in that the clamping region (46) lies away from the associated cap screw.

7. A fastening arrangement according to one of claims 1 or 3 to 5, characterized in that the embossing die contour in the second component (9, 22, 32) serving as counter-punch is constructed as a conical or cambered or spherical countersinking (8) concentric with the screw hole, and in the screw spacer (7; 20; 30, 31) serving as punch is constructed as a circumferential lip (5), concentric with the screw hole, of complementary conical or cambered or spherical construction.

8. A fastening arrangement according to one of claims 1 or 3 to 5, characterized in that the embossing die contour in the second component serving as counter-punch is constructed as a cylindrical countersinking concentric with the screw hole and, in the screw spacer serving as punch is constructed as a circumferential lip, concentric with the screw hole, of complementary cylindrical construction.

9. A fastening arrangement according to one of claims 7 or 8, characterized in that the lip (5) in the screw spacer (7, 20) is produced by a punching operation away from the surface of the screw spacer (7, 20) facing the screw head.

10. A fastening arrangement according to claim 6, characterized in that the embossing die contour in the second component (44) serving as counter-punch is constructed as a cylindrical or conically tapering depression (43) and in the screw spacer (40, 41) serving as punch is constructed as a cylindrical peg or a peg (45) tapering in a conical or cambered or spherical manner.

11. A fastening arrangement according to one of claims 1, 3 or 7 to 9, characterized in that the second screw spacer (31) is constructed as a pressure piece clamped concentrically with the cap screw between the first screw spacer part (30) and the first component (2).

12. A fastening arrangement according to one of claims 3, 6 or 10, characterized in that the second screw spacer part (41) is constructed as a pressure piece arranged between the first screw spacer part (40) and the screw hole, which pressure piece on one side of the cap screw is supported on the second component (44) with its region constructed as a punch or counter-punch by way of the clamping face (46) of the first component (2), and on the other side of the cap screw is supported at at least one further point directly on the second component (44) or by way of the first component (2).

13. A fastening arrangement according to one of the preceding claims, characterized in that the first component (2) has two screw-fixing points, and the clamping region (3) of the first component (2) associated with each screw-fixing point is divided substantially in the direction of the line joining the centres of the screw-fixing points.

14. A fastening arrangement according to one of the preceding claims, characterized in that the first component (2) is fastened with two cap screws and the clamping region (46) of the first component (2) associated with each cap screw is divided substantially in the direction of the line joining the centres of the screw-fixing points.

15. A fastening arrangement according to one of the preceding claims, characterized in that the screw spacer (30, 31; 40, 41) is constructed at the same time as a covering cap for the first component (2).

16. A fastening arrangement according to claim 15, preceding claims, characterized in that the first screw spacer part (30, 40) is constructed as a covering cap.

17. A fastening arrangement according to one of the preceding claims, characterized in that the clamping region (46) of the first component (2), there being at least one such clamping region, associated with each screw-fixing point is divided.

18. A fastening arrangement according to one of the preceding claims, characterized in that the clamping region (3) of the first component, there being at least one such clamping region, associated with each screw-fixing point is divided.

**Revendications**

1. Dispositif pour la fixation d'un premier élément de construction à un deuxième élément de construction, notamment du support d'un capteur de déformations à un élément de construction dont il surveille les déformations, ou à deux éléments dont il surveille les déplacements mutuels, le premier élément de construction pouvant, en au moins une zone de fixation par vis, être assemblé au deuxième élément de construction par au moins une vis à tête, caractérisé par les caractéristiques suivantes :
   a) en au moins une zone de serrage (3) affectée à la zone de fixation par vis, le premier élément de construction (2 ) est réalisé par formage à la presse de manière à être déformable;
   b) entre la tête de la vis au nombre d'au moins une (4) et la zone concernée de fixation par vis du premier élément de construction, il est prévu un organe d'appui de vis sous-jacent (7; 20; 30, 31) qui, par appui direct, est constamment appliqué avec arrêt en rotation contre le deuxième élément de construction (9, 22, 32) et qui recouvre aussi la zone de serrage conjuguée (3);
   c) en leurs zones se trouvant à chaque fois en vis-à-vis de la zone de serrage (3) du premier élément de construction (2) l'organe d'appui de vis sous-jacent (7; 20; 30, 31) et le deuxième élément de construction (9, 22, 32) sont réalisés en tant que poinçon et contre-poinçon ou inversement, à la manière d'un outil d'estampage, et, lors du serrage de la vis à tête, la zone de serrage (3) du premier élément de construction (2) se trouve déformée entre eux en établissant une liaison par combinaison de formes avec le deuxième élément de construction (9, 22, 32).

2. Dispositif pour la fixation d'un premier élément de construction à un deuxième élément de construction, notamment du support d'un capteur de déformations à un élément de construction dont il surveille les déformations, ou à deux éléments dont il surveille les déplacements mutuels, le premier élément de construction pouvant être assemblé au deuxième élément de construction par au moins une vis à tête pénétrant dans le deuxième élément de construction ou le traversant, caractérisé par les caractéristiques suivantes :
   a) en au moins une zone de serrage (46) conjuguée à la vis à tête, le premier élément de construction (2) est réalisé par formage à la presse de manière à être déformable;
   b) entre la tête de la vis au nombre d'au moins une (4) et le deuxième élément de construction (44), il est prévu un organe d'appui de vis sous-jacent (40, 41) qui, par appui direct, est constamment appliqué avec arrêt en rotation contre le deuxième élément de construction (44) et qui recouvre aussi la zone de serrage conjuguée (46);
   c) en leurs zones se trouvant à chaque fois en vis-à-vis de la zone de serrage (46) du premier élément de construction (2) l'organe d'appui de vis sous-jacent (40, 41) et le deuxième élément de construction (44) sont réalisés en tant que poinçon et contre-poinçon ou inversement, à la manière d'un outil d'estampage, et, lors du serrage de la vis à tête, la zone de serrage (46) du premier élément de construction (2) se trouve déformée entre eux en établissant une liaison par combinaison de formes avec le deuxième élément de construction (44).

3. Dispositif de fixation selon l'une des revendications 1 ou 2, caractérisé par le fait que l'organe d'appui de vis sous-jacent (3, 31; 40, 41) est partagé en une première partie d'organe sous-jacent (30, 40) montée avec arrêt en rotation par rapport au deuxième élément de construction (32, 44) et en une deuxième partie d'organe sous-jacent (31, 41) présentant une zone réalisée en tant que poinçon ou contre-poinçon.

4. Dispositif de fixation selon l'une des revendications 1 ou 3, caractérisé par le fait que chaque zone de fixation par vis du premier élément de construction (2) coïncide avec la zone de serrage conjuguée (3) et par le fait que la configuration de l'organe d'appui de vis sous-jacent (7; 20; 30, 31) et du deuxième élément de construction (9, 22, 32) à la manière d'un outil de façonnage à la presse est agencée sensiblement concentriquement à la vis à tête (4).

5. Dispositif de fiction selon l'une des revendications 1 ou 3, caractérisé par le fait que la vis à tête (4) est agencée coaxialement à la zone de serrage conjuguée (3) du premier élément de construction (2).

6. Dispositif de fixation selon l'une des revendications 2 ou 3, caractérisé par le fait que la zone de serge (46) se trouve en dehors de la vis à tête conjuguée.

7. Dispositif de fixation selon l'une des revendications 1 ou 3 à 5, caractérisé par le fait que le contour de façonnage à la presse dans le deuxième élément de construction servant de contre-poinçon (9, 22, 32) est réalisé en tant que dépression conique ou convexe ou sphérique (8), concentriquement au trou pour vis, et, dans l'orange d'appui de vis sous-jacent servant de poinçon (7; 20; 30; 31), en tant que lèvre complémentaire entourante (5), conique, ou bombée ou sphérique, concentrique au trou pour vis.

8. Dispositif de fixation selon l'une des revendications 1 ou 3 à 5, caractérisé par le fait que le contour de façonnage à la presse dans le deuxième élément de construction servant de contre-poinçon est réalisé en tant que dépression cylindrique, concentriquement au trou pour vis, et, dans l'organe d'appui de vis sous-jacent servant de poinçon, en tant que lèvre cylindrique complémentaire entourante concentrique au trou pour vis.

9. Dispositif de fixation selon l'une des revendications 7 ou 8, caractérisé par le fait que la lèvre (5) dans l'organe d'appui de vis sous-jacent (7, 20) est réalisée par un processus de refoulement à partir de la surface de l'organe d'appui de vis sous-jacent (7, 20) tournée vers la tête de vis.

10. Dispositif de fixation selon revendication 6, caractérisé par le fait que le contour de façonnage à la presse dans le deuxième organe de construction (44) servant de contre-poinçon est réalisé en tant que dépression cylindrique ou conique (43), et, dans l'organe d'appui de vis sous-jacent (40, 41) servant de poinçon, est réalisé en tant que téton (45) complémentaire à ladite dépression, lequel est cylindrique ou conique ou bombé ou sphérique.

11. Dispositif de fixation selon l'une des revendications 1, 3 ou 7, caractérisé par le fait que la deuxième partie d'organe sous-jacent (31) est réalisée en tant que pièce de pression serrée concentriquement à la vis à tête entre la première partie d'organe sous-jacent (30) et le premier élément de construction (2).

12. Dispositif de fixation selon l'une des revendications 3, 6 ou 10, caractérisé par le fait que la deuxième partie d'organe sous-jacent (41) est réalisée en tant que pièce de pression agencée entre la première partie d'organe sous-jacent (40) et le trou pour vis, laquelle pièce de poussée prend appui, d'un côté de la vis à tête, par sa région réalisée en tant que poinçon ou contre-poinçon, par l'intermédiaire de la surface de serrage (46) du premier élément de construction (2) et, de l'autre côté de la vis à tête, en au moins un autre endroit, directement contre le deuxième élément de construction (44) ou par l'intermédiaire du premier élément de construction (2).

13. Dispositif de fixation selon l'une des revendications précédentes, caractérisé , par le fait que le premier élément de construction (2) présente deux zones de fixation par vis et par le fait que chaque région de serrage (3) du premier élément de construction (2) affectée à chaque zone de fixation par vis est partagée sensiblement dans la direction de la ligne joignant les milieux des zones de fixation par vis.

14. Dispositif de fixation selon l'une des revendications précédentes, caractérisé par le fait que le premier élément de construction (2) est fixé par deux vis à tête et par le fait que la zone de serrage (46) du premier élément de construction (2) conjuguée à chaque vis à tête est partagée sensiblement dans la direction de la ligne joignant les milieux des vis à tête.

15. Dispositif de fixation selon l'une des revendications précédentes, caractérisé par le fait que l'organe d'appui de vis sous-jacent (30, 31; 40, 41) est réalisé en même temps en tant que capot de recouvrement du premier élément de construction (2).

16. Dispositif de fixation selon revendication 15, caractérisé par le fait que la première partie sous-jacente (30, 40) est réalisée en tant que capot de recouvrement.

17. Dispositif de fixation selon l'une des revendications précédentes, caractérisé par le fait que la zone de serrage au nombre d'au moins une (46) du premier élément de construction (2), conjuguée à chaque vis à tête, est partagée.

18. Dispositif de fixation selon l'une des revendications précédentes, caractérisé par le fait que la zone de serrage au nombre d'au moins une (3) du premier élément de construction (2) conjuguée à chaque zone de fixation par vis est partagée.

FIG. 1

FIG. 2

FIG. 3

FIG. 4

FIG. 5